# EUROPEAN PATENT APPLICATION

(11) **EP 2 234 249 A1**
(43) Date of publication of application: **29.09.2010**
(21) Application number: 08865089.0
(22) Date of filing: 18.12.2008
(51) Int. Cl.: H02K 16/00, H02K 7/116, H02P 5/74

(54) **MOTOR UNIT AND GEAR POWER TRANSMISSION DEVICE**

(30) Priority: 25.12.2007 JP 2007331762; 26.12.2007 JP 2007335049
(71) Applicant: Nabtesco Corporation, Tokyo 105-0022 (JP)
(72) Inventor: AZUMA, Takahito, Kobe-shi Hyogo 651-2271 (JP); WANG, Hongyou, Tokyo 105-0022 (JP)
(74) Representative: Vossius & Partner
(86) International application number: PCT/JP2008/073090
(87) International publication number: WO 2009/081840

(57) **Abstract**

A motor unit is realized which does not continue to drive a driven member in an abnormal state when wiring of any one motor has been disconnected.

The motor unit comprises a plurality of motors. An output shaft of each of the plurality of motors engages with one driven member. The motors are electrically connected in series. Since the plurality of motors is electrically connected in series, all the motors stop when the wiring of any one motor has been disconnected. The driven member does not continue to be rotated by the remaining motors when the wiring of any one of the motors has been disconnected.

## Description

### Technical Field

The present application claims priority to Japanese Patent Application No. 2007-331762 filed on December 25, 2007, and Japanese Patent Application No. 2007-335049 filed on December 26, 2007, the contents of which are hereby incorporated by reference into the present specification. The present application relates to a motor unit for driving one driven member using a plurality of motors, and a gear transmission containing this motor unit.

### Background Art

Japanese Patent Application Publication No. 2006-25478 (Patent Document 1) and Japanese Utility Model Publication No. H02-41748 teach a motor driving device which drives a plurality of motors at the same rotational velocity using one motor driver. In the motor driving device of Patent Document 1, the plurality of motors is electrically connected in parallel. Connecting the plurality of motors in parallel has the advantage that even if the wiring of any of the motors is disconnected, the other motors can continue to rotate.

### Disclosure of Invention

### Problem to be Solved by the Invention

In the case where a plurality of motors is engaged with one driven member to drive the driven member, the plurality of motors is conventionally connected in parallel. This has the advantage that even if any of the motors stops due to disconnection of its wiring, the driven member can continue to be rotated by the other motors. Consequently, in the case where the plurality of motors is engaged with the one driven member, it is practical to connect the plurality of motors in parallel. On the other hand, if the remaining motors drive the driven member despite one of the motors being stopped, driving force may be insufficient such that the driven member cannot be rotated as desired. Alternatively, the remaining motors may become overloaded. That is, the driven member may continue to be driven in an abnormal state. In order to avoid this type of situation, each of the motors must have a sensor attached thereto that detects wiring disconnection. The present specification aims to present a technique to counteract the above issue. The present specification teaches a technique for realizing a motor unit which, without having a sensor attached to each of the motors, is capable of avoiding the issue of the driven member continuing to be driven in the abnormal state when the wiring of any one of the motors has been disconnected. Further, one technique taught in the present specification teaches a gear transmission which comprises a plurality of motors, and which halts rotation automatically when the wiring of any one of the motors has been disconnected.

### Means to Solve the Problem

If a sensor that detects wiring disconnection is attached to each of the motors, the benefit of connecting the plurality of motors in parallel is achieved while the aforementioned disadvantage is avoided. However, attaching the sensor to each of the motors increases the cost of the motor unit. In the technique taught in the present specification, the plurality of motors is not connected in parallel. That is, this surrenders the advantage of connection in parallel that the driven member can continue to be driven by the remaining motors even if the wiring of any one of the motors has been disconnected. According to this novel concept, the above issue is solved without attaching a sensor to each of the motors.

One technique taught by the present specification is capable of realizing a motor unit which comprises a plurality of motors electrically connected in series, each of which having an output shaft that engages with one driven member. In the following description, "electrically (connected) in series" is termed simply "(connected) in series". The motor unit taught in the present specification is the plurality of motors connected in series. Therefore, if wiring (typically, the winding of an electromagnet) of any one motor is disconnected, all the motors stop immediately. Consequently, when the wiring of any one motor has been disconnected, the other motors are prevented from continuing to rotate. It is possible to prevent the driven member from continuing to be driven in an abnormal state. In the present specification, a technique is taught that is suitable for a motor unit that drives one driven member by a plurality of motors.

In the case of a multi-phase motor having three-phase or more winding, the ends of the windings of the final motor connected in series may form in a short-circuited state. Further, an output shaft of each of the motors may engage directly with the one driven member, or may engage via an intermediate member such as a gear, etc. In other words, in this motor unit, the output shafts of the plurality of motors are bound to one another by the one driven member.

As described above, in the motor unit taught in the present specification, the output shafts of the plurality of motors are bound to one another by the one driven member. Therefore, each of the motors cannot rotate independently from the rotation of the other motors. That is, all of the plurality of motors mechanically rotate synchronously. Consequently, if each of the plurality of motors is a multi-phase motor, it is preferred that a phase angle between a rotor and a stator of each of the plurality of motors is identical. More specifically, it is preferred that a geometric phase angle relationship between the rotor and the stator of each of the plurality of motors is identical. If the plurality of motors is connected in series, current with the same phase flows through the plurality of motors in each of their phases. If the geometric phase angle between the rotor and the stator is identical in each of the plurality of motors, the plurality of motors is both electrically and mechanically synchronized. The driven member can be driven stably.

In the motor unit taught in the present specification, the plurality of motors is connected in series. Therefore, all the motors can be controlled synchronously by the one motor driver. Consequently, it is preferred that a sensor that detects one of a rotational angle of the output shaft and an angular velocity of the output shaft is attached to any one of the plurality of motors, and the one of the plurality of motors to which the sensor is attached is controlled with feedback based on an output signal of the sensor. The angle of all the motors, or the angular velocity of all the motors, can be controlled by one motor driver and one sensor.

A gear transmission comprising a plurality of motors has been given as a typical device which drives one driven member by a plurality of motors. Another technique taught in the present specification is suitable for a gear transmission which drives one driven member by a plurality of motors. The other technique taught in the present specification may also be realized in a gear transmission that contains the above motor unit. This gear transmission comprises an internal gear member, a carrier, a plurality of crankshafts, the driven member (may also be termed "external gear"), and the plurality of motors. The internal gear member has an internal gear formed at its inner circumference. The carrier is positioned coaxially with the internal gear at an inner side of the internal gear member. Further, the carrier is supported rotatably by the internal gear member. Each of the crankshafts extends along an axis line of the carrier. Further, each of the crankshafts is supported rotatably by the carrier. An eccentric member is fixed to each of the crankshafts.

A plurality of through holes is formed in the external gear. The through holes are engaged respectively with the eccentric members of the plurality of crankshafts. Outer teeth are formed on the external gear, and these outer teeth mesh with the internal gear of the internal gear member. The external gear rotates eccentrically around the axis line of the carrier in accordance with rotation of the plurality of crankshafts while meshing with the internal gear. The plurality of motors is fixed to one of the internal gear member and the carrier. The output shafts of the plurality of motors engage respectively with the plurality of crankshafts. Consequently, the external gear can rotate eccentrically around the axis line of the internal gear in accordance with rotation of the crankshafts.

In the gear transmission, the external gear is equivalent to the driven member engaging with the motor unit. The output shaft of each of the motors engages with the one driven member (external gear) via the crankshaft. Since the external gear and the carrier rotate integrally, the carrier can also be termed the "driven member". The gear transmission is termed an "eccentric oscillating type gear transmission". If the plurality of motors is fixed to the internal gear, the carrier corresponds to an output member (a member that rotates relative to a member fixing the motors) of the gear transmission. If the plurality of motors is fixed to the carrier, the internal gear member corresponds to an output member of the gear transmission.

The gear transmission transmits torque to the output member using the plurality of motors. If the same amount of torque is to be output, freedom of placement of the motors is increased by providing a plurality of small motors rather than providing one large motor. For example, the gear transmission can be miniaturized. On the other hand, in the case of the gear transmission, it is undesirable to drive continuously while the torque applied to the external gear is in a biased state. The desired rotation can no longer be applied to the output member of the gear transmission. In other words, the output member of the gear transmission continues to be driven in an abnormal state. However, the gear transmission taught in the present specification, which comprises a plurality of motors, stops all the motors if the wiring of any one motor is disconnected. Consequently, it is possible to prevent the gear transmission from continuing to drive in the abnormal state without providing each of the plurality of motors with a sensor for detecting wiring disconnection.

### Effect of the Invention

According to the present invention, a motor unit in which a driven member does not continue to drive in an abnormal state when the wiring of any one of the motors has been disconnected can be realized. Further, a gear transmission in which the plurality of motors drives the driven member, and which is suitable for controlling all the motors using one motor driver can be presented.

### Brief Description of the Drawings

Fig. 1 shows a cross-sectional view of a gear transmission of a first embodiment.
Fig. 2 shows a cross-sectional view along the line II-II of FIG. 1
Fig. 3 shows a cross-sectional view along the line III-III of Fig. 2.
Fig. 4 shows a partial enlarged view of Fig. 1.
Fig. 5 shows a plan view viewed from the direction of the arrow A of Fig. 4.
Fig. 6 shows a circuit diagram of a motor unit of the first embodiment.
Fig. 7 shows a cross-sectional view along the line VII-VII of Fig. 1.
Fig. 8 shows a variant of the cross-sectional view of Fig. 7.
Fig. 9 shows a circuit diagram of a conventional motor unit.
Fig. 10 shows a partial cross-sectional view of a gear transmission of a second embodiment.
Fig. 11 shows a partial cross-sectional view of a gear transmission of a third embodiment.
Fig. 12 shows a partial cross-sectional view of a gear transmission of a fourth embodiment.
Fig. 13 shows a partial cross-sectional view of a gear transmission of a fifth embodiment.

### Preferred Embodiments

Before describing the embodiments, some technical features of the embodiments will be described briefly below. The main technical features are contained in the descriptions in the embodiments.
(First feature) Each of a plurality of motors has identical torque characteristics, and is controlled by one motor driver.
(Second feature) An encoder that detects the rotational angle of a rotor is attached to only one motor among the plurality of motors. An encoder is not attached to the other motors.
(Third feature) The rotor of each of the motors is directly coupled coaxially to each of respective crankshafts, and a stator of each of the motors is fixed to a carrier.
(Fourth feature) A pin that extends along a rotation shaft is formed on one of an output shaft and the rotor of the motor. A through hole extending in a circumferential direction, and into which the pin fits, is formed in another of the rotor and the output shaft. This through hole has a long oval shape extending in the circumferential direction. The relative rotation of the rotor and the stator can be allowed while preventing the relative rotation of the output shaft and the stator of the motor within the range of the length of the through hole in the circumferential direction. That is, the phase angle between the rotor and the stator can be adjusted.
(Fifth feature) In a temporary fixing process, the rotor is attached rotatably to the crankshaft, and the stator of each of the motors is fixed to the carrier. At this juncture, the rotor is fixed to the crankshaft in a third process.
(Sixth feature) A through hole that passes through the gear transmission and extends along the axis line of the carrier is formed. Wiring, piping, etc. can be passed through this through hole.

Embodiments will be described with reference to the drawings. In the embodiments below, a gear transmission comprising a motor unit and a gear unit will be described. However, it is also possible to apply the motor unit described below to drive a driven member other than the gear unit. Further, a gear unit provided with a reduction mechanism will be explained as an example of the gear unit. However, the present invention is also suitable for application to a gear transmission provided with a gear unit (a gear unit for increasing the rotation of the motor, etc.) other than the gear unit provided with the reduction mechanism.

### (First embodiment)

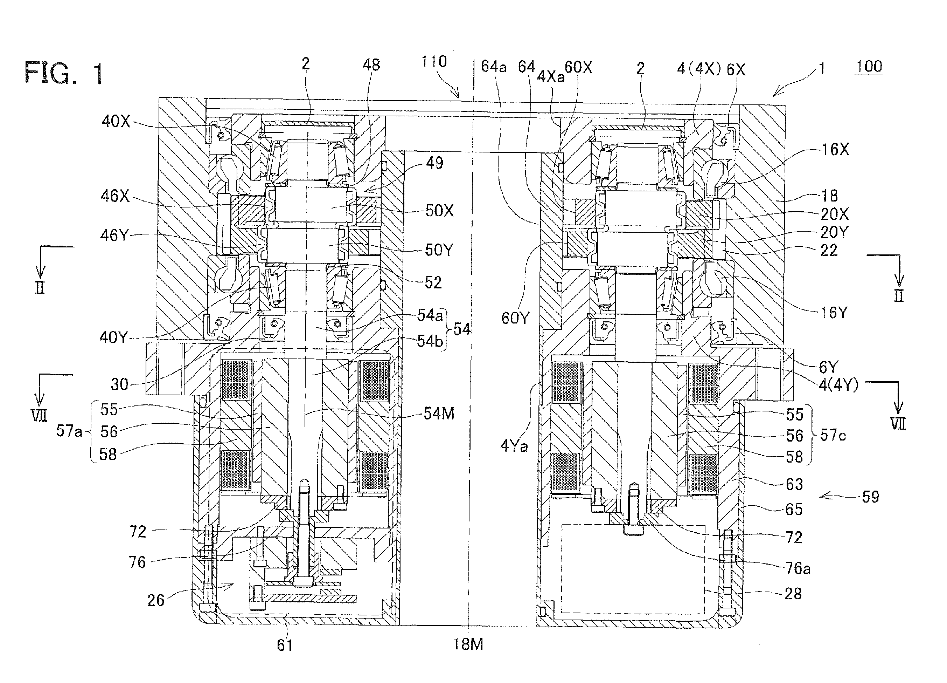

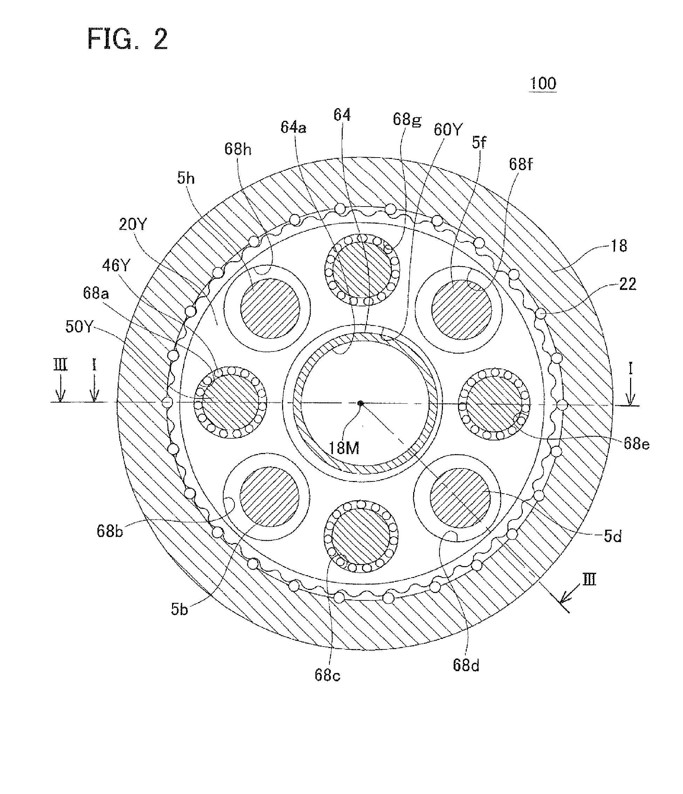

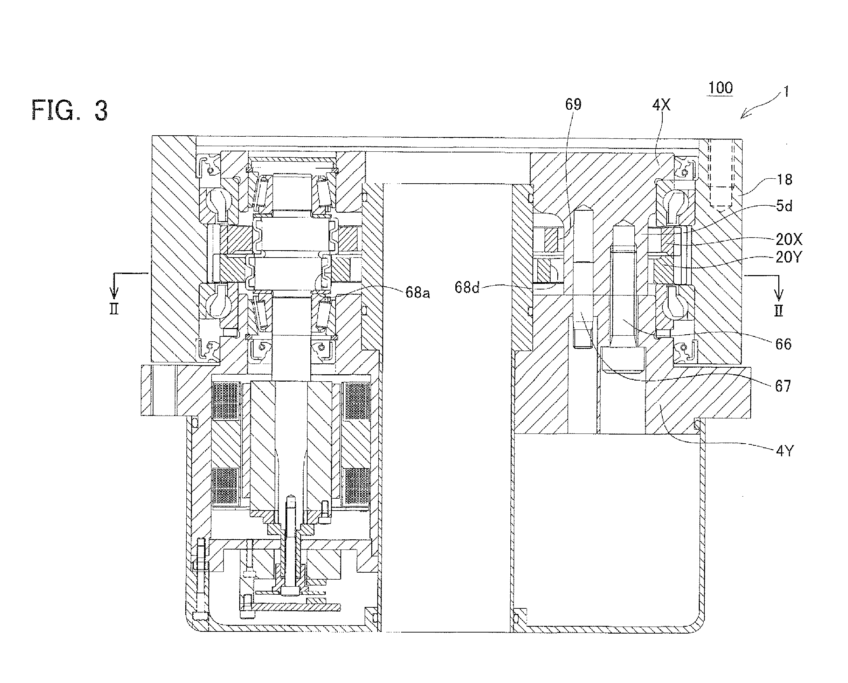

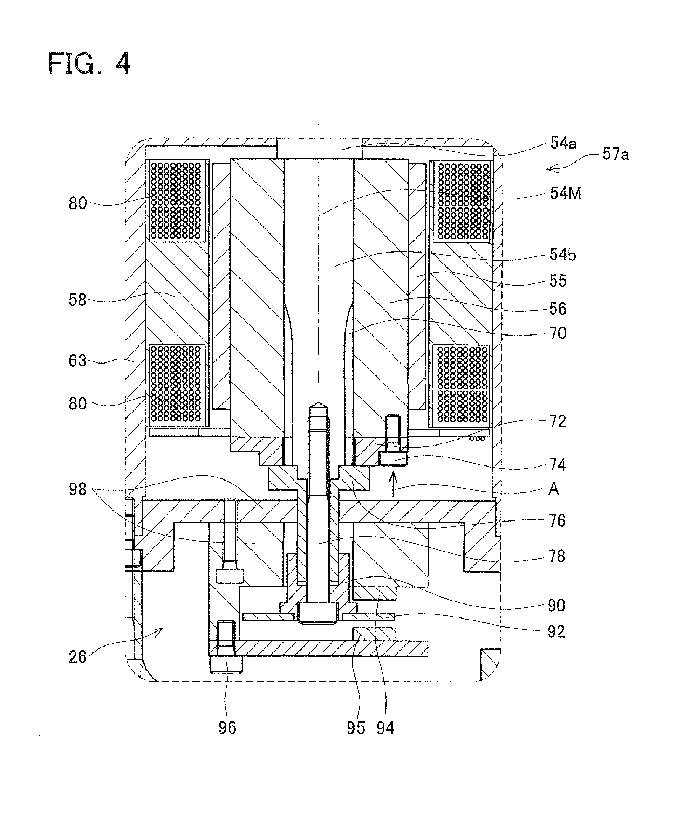

Fig. 1 shows a cross-sectional view of a gear transmission (may also be termed "reduction gear") 100 of the present embodiment. Fig. 2 shows a cross-sectional view along the line II-II of Fig. 1. Fig. 3 shows a cross-sectional view of the reduction gear 100 viewed from a direction differing from Fig. 1. The cross-sectional view of Fig. 1 is equivalent to a cross-section along the line I-I of Fig. 2, and the cross-sectional view of Fig. 3 is equivalent to a cross-section along the line III-III of Fig. 2. Fig. 4 shows an enlarged view of a region 61 surrounded by the broken line of Fig. 1. In order to clarify the figures, reference numbers are added only in specific components in the cross-sectional view of Fig. 3, and the reference numbers of components that are essentially the same as in Fig. 1 are omitted.

As shown in Fig. 1, the reduction gear 100 comprises a gear unit 1 and a motor unit 59. The motor unit 59 comprises a plurality of motors 57a-57d. In Fig. 1, only the motors 57a and 57c are shown, and the other motors 57b, 57d are not shown.

First, the gear unit 1 will be described. The gear unit 1 comprises an internal gear member 18, external gears 20X, 20Y (equivalent to an example of a driven member), a plurality of crankshafts 49, and a carrier 4. As will be described later, the carrier 4 is configured by a carrier upper portion 4X and a carrier base 4Y. Further, as will be described later, the internal gear member 18 may be termed an "output part of the gear unit 1". A portion that rotatably supports the internal gear member 18 may be termed a "fixed part". Specifically, the carrier 4 (the carrier upper portion 4X and carrier base 4Y) is equivalent to the fixed part of the gear unit 1. In the following description, in the case where common phenomena are described for a plurality of essentially identical types of components, the alphabet letters added to the reference numbers may be omitted.

As shown in Fig. 2, the internal gear member 18 is ring shaped, and a plurality of inner teeth is formed along its inner circumference. The internal gear member 18 has a number of teeth differing from the number of teeth of the external gear 20. An internal gear is formed with a plurality of inner pins (inner teeth) 22 disposed along the inner circumference of the internal gear member 18. In other words, the internal gear member 18 corresponds to the internal gear itself.

The external gear 20 rotates eccentrically while meshing with the inner pins 22 of the internal gear member 18. That is, a center of the external gear 20 moves around an axis line 18M of the internal gear member 18. Moreover, the axis line 18M can be termed an "axis line of the internal gear formed by the inner pins 22", and can also be termed an "axis line of the carrier 4 (to be described)". A first through hole 60 is formed in a center portion of the external gear 20. A cylindrical member 64 passes through the first through hole 60 (see also Fig. 1). A plurality of second through holes 68a-68h is formed around the first through hole 60 of the external gear 20. Each of the second through holes 68 is formed along a mutual circumference. Although this will be described in detail later, eccentric members 50 of the crankshafts 49 fit into the second through holes 68a, 68c, 68e, 68g. Further, columnar parts 5 of the carrier 4 pass through the second through holes 68b, 68d, 68f, 68h respectively.

As shown in Fig. 3, the carrier upper portion 4X and the carrier base 4Y are fastened together by a bolt 66. The carrier upper portion 4X and the carrier base 4Y configure the carrier 4 of the gear unit 1 by being integrated together. A positioning pin 67 prevents the carrier upper portion 4X and the carrier base 4Y from rotating relative to one another. The carrier 4 is disposed at an inner side of the internal gear member 18. In the reduction gear 100, the carrier base 4Y is fixed (see also Fig. 1) to a base part (e.g., rotating part of a robot, base of a rotator, etc.) by a bolt, etc. That is, the carrier 4 (the carrier upper portion 4X and the carrier base 4Y) is restricted from rotating with respect to the base part. Therefore, the external gears 20X, 20Y are also restricted from rotating with respect to the base part. As described above, the internal gear member 18 rotates with respect to the external gears 20X, 20Y (the carrier 4). Consequently, the carrier 4 is equivalent to the fixed part of the reduction gear 100. The internal gear member 18 is equivalent to the output part that rotates with respect to the fixed part (the carrier upper portion 4X and the carrier base 4Y) of the reduction gear 100. Moreover, if the internal gear member 18 is fixed to the base part, the carrier 4 rotates with respect to the internal gear member 18. Moreover, the axis line of the carrier 4 is identical to the axis line 18M of the internal gear member 18. That is, the carrier 4 is positioned coaxially with the internal gear member 18.

As shown in Fig. 1, a pair of angular ball bearings 16X, 16Y is positioned between the carrier 4 and the internal gear member 18. The internal gear member 18 is supported by the angular ball bearings 16X, 16Y so as to be capable of rotating with respect to the carrier 4 and incapable of moving in a thrust direction. Moreover, the carrier 4 can also be supported so as to be capable of rotating with respect to the internal gear member 18 and incapable of moving in the thrust direction. In the present embodiment, the pair of angular ball bearings 16X, 16Y is positioned between the carrier 4 and the internal gear member 18. However, tapered roller bearings, etc. can be utilized instead of the angular ball bearings.

The crankshaft 49 comprises a shaft 54, and the eccentric members 50X, 50Y that are eccentrically angled with respect to the axis line 54M of the shaft 54. The shaft 54 has a shaft 54a and a shaft 54b. The shaft 54a and the shaft 54b are formed integrally. The shaft 54b can also be termed a "part of the shaft 54", and can also be termed an "output shaft of the motor 57 (to be described)". The axis line 54M extends parallel to the axis line 18M of the internal gear member 18 (can also be termed the "axis line of the carrier 4"). Consequently, the crankshaft 49 extends along the axis line 18M of the carrier 4. A pair of tapered roller bearings 40X, 40Y is positioned between the carrier 4 and the crankshaft 49. The crankshaft 49 is supported by the tapered roller bearings 40X, 40Y so as to be capable of rotating with respect to the carrier 4 and incapable of moving in the thrust direction. The eccentric members 50 fit into the second through holes 68a, 68c, 68e, 68g (see Fig. 2) via needle roller bearings 46 respectively.

As shown in Fig. 3, the columnar part 5d of the carrier upper portion 4X passes through a second through hole 69 of the external gear 20X and the second through hole 68d of the external gear 20Y. As shown in Fig. 2, the carrier upper portion 4X has the plurality of columnar parts 5b, 5d, 5f, 5h, and each of the columnar parts 5b, 5d, 5f, 5h passes through one corresponding second through hole 68b, 68d, 68f, 68h. Although not shown, each of the columnar parts 5b, 5d, 5f, 5h also passes through one corresponding second through hole 69 (see Fig. 3) of the external gear 20X. Moreover, in Fig. 2, a hole into which the positioning pin 67 is inserted, and a bolt hole into which the bolt 66 is screwed, are omitted (see Fig. 3).

As shown in Fig. 2, a space is maintained between the second through holes 68b, 68d, 68f, 68h of the external gear 20Y and the columnar parts 5b, 5d, 5f, 5h, which allows the external gear 20Y to rotate eccentrically around the axis line 18M. Similarly, a space is maintained between the second through holes 69 of the external gear 20X and the corresponding columnar parts 5, which allows the external gear 20X to rotate eccentrically around the axis line 18M.

As described above, the crankshaft 49 has the eccentric members 50 (the eccentric members 50X and 50Y). The eccentric members 50Y fit into the second through holes 68a, 68c, 68e, 68g of the external gear 20Y (see Fig. 2) via the needle roller bearings 46Y. In other words, the plurality of second through holes 68a, 68c, 68e, 68g, into which the eccentric members 50 of the crankshafts 49 are fitted, is formed in the external gear 20Y. The eccentric members 50Y can rotate inside of the second through holes 68a, 68c, 68e, 68g. Similarly, the eccentric members 50X fit into the second through holes 69 of the external gear 50X. Consequently, the plurality of crankshafts 49 engages with the external gear 20X and also engages with the external gear 20Y. As shown in Fig. 1, a stopping member 48 is positioned between the eccentric member 50X and the tapered roller bearing 40X, and a stopping member 52 is positioned between the eccentric member 50Y and the tapered roller bearing 40Y. The stopping members 48, 52 prevent the eccentric members 50X, 50Y from being displaced in the direction of the axis line 54M.

In the crankshaft 49, the axis lines of the eccentric members 50X and 50Y are each offset from the axis line 54M. However, the offset directions of the axis lines of the eccentric members 50X and 50Y are opposite. That is, the axis line of the eccentric member 50X and the axis line of the eccentric member 50Y are always at opposing sides with the axis line 54M therebetween. Consequently, the external gear 20X and the external gear 20Y are always positioned symmetrically with respect to the axis line 18M of the internal gear member 18. Therefore, a relationship is realized in which the rotational balance of the gear unit 1 is maintained.

A central hole 4Xa is formed in the carrier upper portion 4X and passes through the center thereof. A central hole 4Ya is formed in the carrier base 4Y and passes through the center thereof. The cylindrical member 64 is fixed to the carrier upper portion 4X and the carrier base 4Y at the inner side of the central hole 4Xa and the central hole 4Ya. The cylindrical member 64 passes through both the first through holes 60X, 60Y of the external gears 20X, 20Y respectively. A central through hole 110 is formed in the gear unit 1 by the inner circumference surface 64a of the cylindrical member 64, this central through hole 110 including the axis line 18M of the internal gear member 18 (output part), and passing from a base part side to an output side (the side where the member rotated by the internal gear member 18 is present) of the gear unit 1. The formation of the central through hole 110 in the gear unit 1, this central through hole 110 including the axis line 18M of the output part and passing from the base part side to the output side of the gear unit 1, is possible because the internal gear member 18 is ring shaped, and because the first through holes 60X, 60Y are formed in a center part of the external gears 20X, 20Y that rotate eccentrically at the inner side of the internal gear member 18.

The terms "fixed part" and "output part" of the gear unit 1 will be described. As will be described later, in the reduction gear 100, the motor 57 is fixed to the carrier base 4Y. When a rotor 56 of the motor 57 rotates, the internal gear member 18 rotates with respect to the carrier 4 and the motor 57. In the present embodiment, the carrier 4 is equivalent to a frame member of the gear unit 1. Consequently, the internal gear member 18 can be termed the "output part of the gear unit 1", and the carrier 4 can be termed the "fixed part of the gear unit 1".

A pair of oil seals 6X, 6Y is positioned between the carrier 4 and the internal gear member 18. An oil seal 30 is positioned between the carrier base 4Y and respective shaft 54a of each of the crankshafts 49. Seal caps 2 are positioned at an upper portion of the carrier upper portion 4X. The oil seals 6X, 6Y, 30 and the seal caps 2 can prevent oil (lubricant), etc. that has been filled into the gear unit 1 from leaking to the exterior.

Next, the motor unit 59 will be described. As shown in Fig. 1, the motor unit 59 comprises the motors 57a, 57b, 57c and 57d (the motors 57b, 57d are not shown). Each of the plurality of motors 57a-57d comprises a stator 58 and the rotor 56. A permanent magnet 55 is formed on a surface of the rotor 56. The permanent magnet 55 will be described later. The rotor 56 is coupled to the shaft 54 of the crankshaft 49. As described above, the shaft 54 has the shaft 54a and the shaft 54b. The shaft 54b can also be termed the "output shaft of the motor 57". Consequently, the output shaft of each of the motors 57 can be regarded as being directly coupled coaxially with each of the crankshafts 49. The axis line of the rotor 56 is identical to the axis line 54M of the shaft 54. The stator 58 is fixed to a stator fixing part 63 that extends from the carrier base 4Y. In other words, the stator 58 is fixed to the carrier 4. A motor case 65 is positioned at an outer side of the stator fixing part 63. The stator fixing part 63 is housed in the motor case 65. The plurality of motors 57 can also be regarded as being housed in the motor case 65. The reduction gear 100 is provided with the four crankshafts 49, and the corresponding motors 57a-57d are coupled to the crankshafts 49.

An encoder (rotational angle sensor) 26 that detects the rotational angle of the rotor 56 is attached to the one motor 57a among the motors 57a-57d. The encoder 26 is not coupled to the other three motors 57b, 57c and 57d. Instead of the encoder 26, a brake (not shown) is attached to the other three motors 57b, 57c and 57d. The brake is positioned in the space shown by a broken line 28. That is, using the space 28, the brake is attached only to the motors 57 which do not have the encoder 26 coupled thereto. Consequently, compared to the case where both the encoder 26 and the brake are coupled to the motor 57, the length of the reduction gear 100 in the axial direction can be reduced. Moreover, a brake need not be coupled with all the motors 57; instead of the brake, a servo lock of the motors 57 can be used.

The motors 57 are positioned at an outer side of a cylinder extending in the axial direction of the central through hole 110 of the gear unit 1. More accurately, if the reduction gear 100 is viewed from the direction of the axis line 18M, the motors 57 are positioned at the outer side of the central through hole 110 of the gear unit 1. In other words, the motors 57 are positioned at an outer side of the inner circumference surface 64a of the cylindrical member 64. By positioning the motors 57 in this manner, wiring, piping, etc. (not shown) can be passed through the central through hole 110 of the gear unit 1 without interfering with the motors 57.

As described above, the stator 58 is fixed to the carrier base 4Y, and the rotor 56 is coupled to the shaft 54. The rotor 56 can rotate with respect to the stator 58. The axis line of the rotor 56 is identical to the axis line 54M of the crankshaft 49. Consequently, the shaft 54 and the rotor 56 rotate integrally. A bearing is not present between the stator 58 and the rotor 56 for supporting the rotor 56 so that the rotor 56 rotates with respect to the stator 58 and so that the rotor 56 cannot move in the thrust direction. The rotor 56 is supported so as to be capable of rotating with respect to the stator 58 and incapable of moving in the thrust direction by the pair of cylindrical roller bearings 40X, 40Y that support the crankshaft 49.

As described above, the eccentric members 50Y of the crankshafts 49 engage with the second through holes 68 of the external gear 20Y respectively. Further, each of the crankshafts, 49 is coupled to the output shaft (the rotor 56) of the motor 57. Consequently, the output shaft of each of the motors 57 cannot rotate independently of the other motors 57. That is, the rotor 56 of each of the motors 57 cannot rotate independently of the rotors 56 of the other motors 57. In other words, the output shaft of each of the motors 57 is engaged with one driven member (the external gear 20Y) via the crankshaft 49. The torque of all the motors 57 is transmitted to the external gear 20Y, whereupon the external gear 20Y rotates eccentrically. The same is true for the external gear 20X.

Next, the mechanism of the reduction gear 100 will be described. When the rotors 56 of the motors 57 rotate, and the crankshafts 49 rotate, the eccentric members 50 rotate eccentrically around the axis lines 54M. In other words, the axis lines of the eccentric members 50 moves around the axis lines 54M respectively. When the eccentric members 50 rotate eccentrically, the external gear 20 rotates eccentrically around the axis line 18M of the internal gear member 18. The center of the external gear can also be said to move around the axis line 18M of the internal gear member 18. Since the external gear 20 and the internal gear member 18 mesh, when the external gear 20 rotates eccentrically, the internal gear member 18 rotates relative to the external gear 20. As described above, since the rotation of the external gear 20 with respect to the fixed part (the carrier 4) is restrained, the internal gear member 18 rotates relative to the fixed part (the carrier 4). The internal gear member 18 is equivalent to the output member of the reduction gear 100. When the motors 57 are driven, the internal gear member 18 rotates with respect to the fixed part (the carrier 4). The rotation of the motors 57 is reduced by the gear unit 1 and is transmitted to the internal gear member 18. In other words, output torque of the motors 57 is increased by the gear unit 1 and transmitted to the internal gear member 18.

As shown in Fig. 2, in the reduction gear 100, the number of teeth of the external gear 20 is fifty-one, and the number of teeth of the internal gear member 18 (the number of inner pins 22) is twenty-six. Further, the outer teeth of the external gear 20 mesh with alternate inner pins 22. Consequently, when the external gear 20 moves (rotates eccentrically) fifty-two times (26x2) around the axis line 18M, the internal gear member 18 rotates one time around the axis line 18M. Further, as is clear from Fig. 2, all the outer teeth of the external gear 20 make contact with the inner pins 22. Therefore, a structure is realized in which backlash between the external gear 20 and the internal gear member 18 does not readily occur. Further, as shown in Fig. 1, the external gears 20X, 20Y both mesh with one inner pin 22. Consequently, backlash between the external gear 20 and the internal gear member 18 occurs less readily. Moreover, the inner pins 22 are not fixed to the internal gear member 18. The inner pins 22 fit into a groove formed in the internal gear member 18, and can rotate within this groove. Moreover, the reduction ratio of the reduction gear 100 can be changed as desired by adjusting the number of teeth of the external gear 20 and the number of teeth of the internal gear member 18 (the number of inner pins 22).

The motor 57 will be described in detail with reference to Fig. 4. As described above, the motor 57 comprises the rotor 56 and the stator 58. The motor 57 is a three-phase motor. A winding 80 is wound around the stator 58, and the permanent magnet 55 is provided on the surface of the rotor 56. Moreover, the permanent magnet 55 may be fixed to the surface of the rotor 56, or alternately, may be embedded into the rotor 56. The stator 58 is fixed to the stator fixing part 63. The rotor 56 is positioned coaxially with the stator 58, and can rotate with respect to the stator 58. The rotor 56 and the shaft 54b are fixed by a spline ring (may also be termed "shaft fixing member") 72. More accurately, the spline ring 72 and a spline 70 formed on the shaft 54b form a spline junction, and the spline ring 72 is fixed to the rotor 56 by bolts 74. The shaft 54b and the spline ring 72 are prevented from rotating relative to one another.

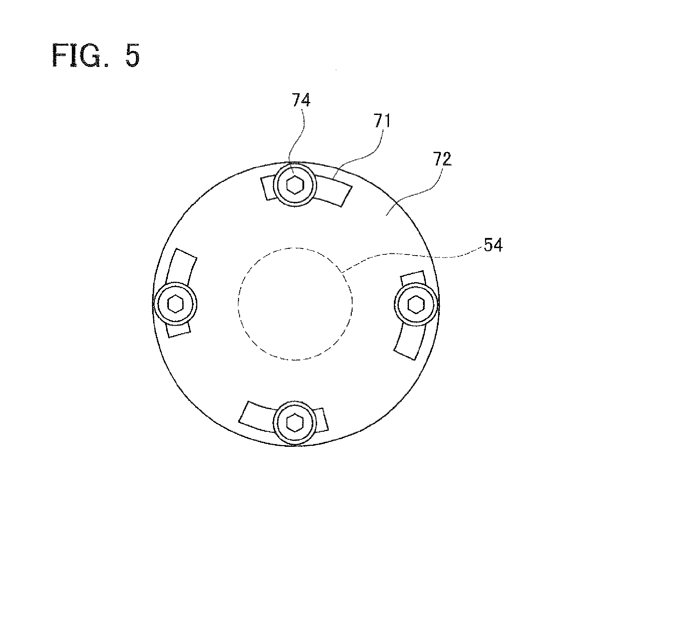

Here, a fixed state of the spline ring 72 and the rotor 56 will be described. In Fig. 5, the spline ring 72 is shown in a view from the direction of the arrow A of Fig. 4. As shown in Fig. 5, through holes 71 extending in a circumferential direction are formed in the spline ring 72. The bolts 74 pass through the through holes 71 respectively, and fix the spline ring 72 and the rotor 56 (see also Fig. 4). Consequently, the relative rotational angle of the rotor 56 with respect to the spline ring 72 can be adjusted within the range of the length of the through holes 71 in the circumferential direction. In other words, the relative rotational angle of the rotor 56 can be adjusted with respect to the shaft 54b (part of the crankshaft 49). Further, the spline ring 72 can be considered a part of the shaft 54b (can also be termed the "output shaft of the motor 57"), and the bolts 74 can be considered pins extending along the rotation shaft 54b. In this case, it can also be said that the pins 74 that extend along the output shaft 54b are provided on the rotor 56, and the through holes 71, which extend in the circumferential direction and into which the pins 74 fit, are formed in the output shaft 54b. The rotor 56 is fixed to the shaft 54b via the spline ring 72.

If the relative rotational angle of the rotor 56 can be adjusted with respect to the spline ring 72, the shaft 54b and the rotor 56 can be coupled together, whereby the phase angle between the rotor 56 and the stator 58 is in an aligned state for all the motors 57. Consequently, the spline ring 72 (or the through holes 71 formed in the spline ring 72) can also be termed an "adjusting mechanism capable of adjusting the phase angle between the rotor 56 and the stator 58".

As shown in Fig. 1, in the motor 57c, as well, the rotor 56 and the shaft 54b are fixed by the spline ring 72. Although not shown, this is also the case for the motors 57b, 57d. Consequently, the adjusting mechanism is formed in the reduction gear 100, this adjusting mechanism being capable of independently adjusting the phase angle between the rotor 56 and the stator 58 for each of the motors 57a-57d.

As shown in Fig. 4, an edge part of the rotor 56 at the gear unit 1 side makes contact with a step formed by the shaft 54a and the shaft 54b. Further, an edge part of the rotor 56 at the side opposite the gear unit 1 side makes contact with a rotor supporting member 76. The rotor supporting member 76 is fixed to the shaft 54b by a bolt 78. The shaft 54a and the rotor supporting member 76 prevent the rotor 56 from moving in the direction of the axis line 54M. The rotor supporting member 76 rotates integrally with the shaft 54b.

A rotation part 90 of the encoder 26 is fixed to the rotor supporting member 76 by the bolt 78. Consequently, the rotation part 90 rotates integrally with the rotor supporting member 76, and rotates integrally with the shaft 54b. A slit plate 92 is formed in the rotation part 90. A photodetector 94 of the encoder 26 is fixed to an encoder supporting part 98. A light emitting element 95 of the encoder 26 is fixed to the encoder supporting part 98 by a bolt 96. The encoder supporting part 98 is fixed to the stator supporting part 63 extending from the carrier base 4Y. That is, the photodetector 94 and the light emitting element 95 are fixed to the carrier 4. The slit plate 92 is positioned between the photodetector 94 and the light emitting element 95. Consequently, the encoder 26 can detect the rotational angle of the shaft 54b.

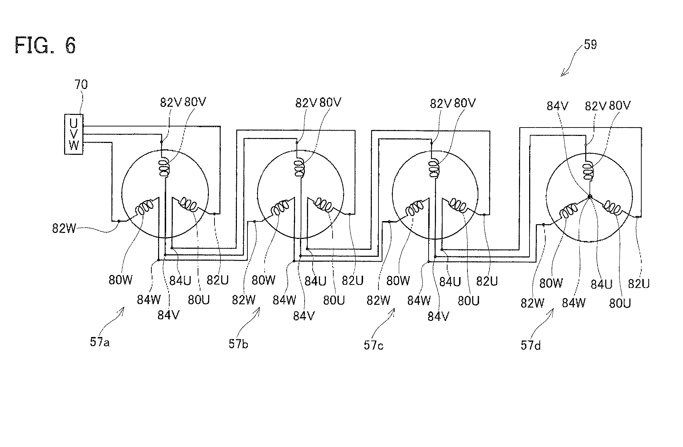

Next, the circuit of the motor unit 59 will be described. A circuit diagram of the motor unit 59 is shown in Fig. 6. As described above, the motor unit 59 comprises the motors 57a-57d. The motors 57a-57d are three-phase motors, and all have identical torque characteristics. Each of the motors 57a-57d comprises a winding 80U, a winding 80V, and a winding 80W. Of both edge parts of the winding 80U, one edge part is represented by the reference number 82U, and the other edge part is represented by the reference number 84U. Similarly, one edge part of the winding 80V is represented by the reference number 82V, and the other edge part is represented by the reference number 84V. One edge part of the winding 80W is represented by the reference number 82W, and the other edge part is represented by the reference number 84W. In the case where one motor is connected with a motor driver 70, the edge parts represented by the reference number 82 are edge parts at a side connected with an output side of the motor driver. The edge parts represented by the reference number 84 are edge parts connected with a ground side of the motor driver. In the case where one motor is connected with the motor driver 70, the three edge parts (84U, 84V, and 84W) represented by the reference number 84 may be made to short circuit instead of being connected with the ground side of the motor driver.

One ends 82U, 82V, 82W of the windings 80U, 80V, 80W of the motor 57a are connected respectively with a U phase, V phase, and W phase output end of the motor driver 70. The other ends 84U, 84V, 84W of the windings 80U, 80V, 80W of the motor 57a are connected respectively with the one ends 82U, 82V, 82W of the windings 80U, 80V, 80W of the motor 57b. The other ends 84U, 84V, 84W of the windings 80U, 80V, 80W of the motor 57b are connected respectively with the one ends 82U, 82V, 82W of the windings 80U, 80V, 80W of the motor 57c. The other ends 84U, 84V, 84W of the windings 80U, 80V, 80W of the motor 57c are connected respectively with the one ends 82U, 82V, 82W of the windings 80U, 80V, 80W of the motor 57d. The other ends 84U, 84V, 84W of the windings 80U, 80V, 80W of the motor 57d make a star connection (short circuit). Put briefly, the motors 57a-57d are electrically connected in series in the sequence: motor 57a, motor 57b, motor 57c, motor 57d.

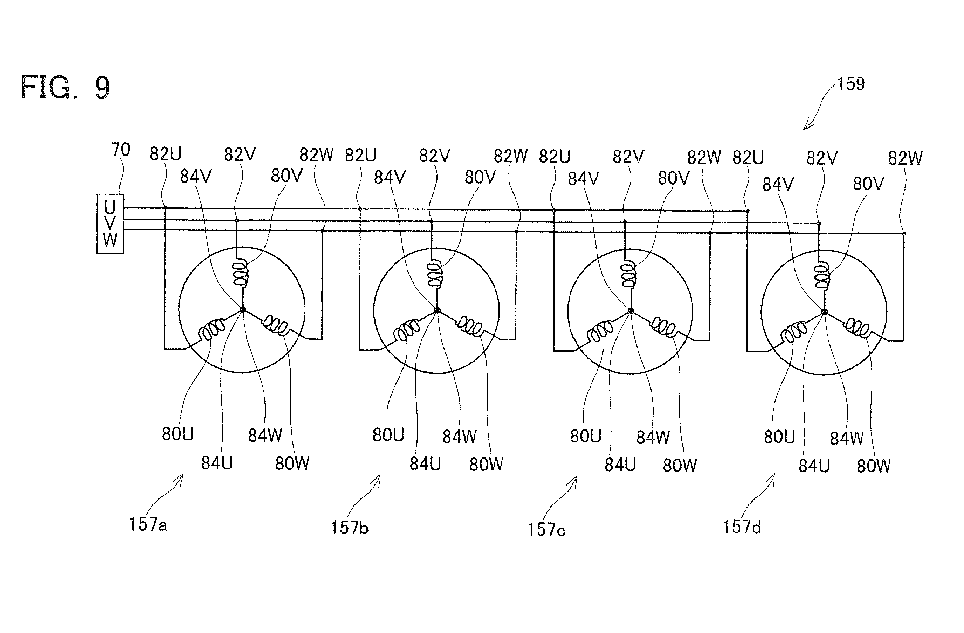

Here, the motor unit 59 will be compared with a conventional motor unit 159. The conventional motor unit 159 is shown in Fig. 9. The motor unit 159 comprises motors 157a-157d. The motors 157a-157d are three-phase motors, and all have identical torque characteristics. Further, the motors 157a-157d have torque characteristics identical to those of the motors 57a-57d. In the motor unit 159, the one ends 82U of the windings 80U of the motors 157a-157d are connected with the U phase of the motor driver 70. The one ends 82V of the windings 80V of the motors 157a-157d are connected with the V phase of the motor driver 70. The one ends 82W of the windings 80W of the motors 157a-157d are connected with the W phase of the motor driver 70. Moreover, the other ends 84U, 84V, 84W of the motor 157a make a star connection. Similarly, the other ends 84U, 84V, 84W of each of the motors 157b-157d also make a star connection. Put briefly, the motor 157a, motor 157b, motor 157c, and motor 157d are electrically connected in parallel.

In the conventional motor unit 159, for example, if the winding 80U of the motor 157a becomes disconnected (or if a poor connection occurs in the edge parts 82U, 84U), current no longer flows through the winding 80U of the motor 157a. Consequently, the motor 157a becomes unable to rotate normally. However, since current continues to flow through the windings of the other motors 157b, 157c and 157d, the motors 157b, 157c and 157d can continue to rotate. Therefore, the external gear 20 continues to be driven (rotated eccentrically) by the motors 157b, 157c and 157d. As described above, the output shafts of the motors 157a-157d engage with the one driven member (the external gear 20). Consequently, the motor 157a that cannot rotate normally also continues to rotate in accordance with the driving of the external gear 20. Since the motor 157a is not rotating on its own, it becomes a load on the driving of the external gear 20. Therefore, the torque applied to the external gear 20 becomes biased, and the external gear 20 does not rotate as desired. As the result, the rotational accuracy of the reduction gear 100 worsens.

By contrast, in the motor unit 59, for example, if the winding 80U of the motor 57a becomes disconnected (or if a poor connection occurs in the edge parts 82U, 84U), current ceases to flow through all the windings 80U of the motors 57a-57d. Therefore, not only the motor 57a stops, but the other motors 57b, 57c and 57d also stop. Consequently, the operation of the reduction gear 100 stops. It is possible to prevent the reduction gear 100 from continuing driving in a state of poor rotational accuracy.

Further, although not shown in Fig. 6, the encoder 26 attached to the motor 57a is electrically connected with a controller that outputs torque instructions to the motor driver 70. The controller controls the motor driver 70 based on the detection values of the encoder 26. That is, the plurality of motors 57 are feedback controlled based on the output of the encoder 26 attached to the one motor 57a.

Other advantages of the motor unit 59 will be described in comparison with the conventional motor unit 159. In the conventional motor unit 159, the motor driver 70 processes the total secondary current of the motors 157a-157d, and adjusts the output torque of the motors 157a-157d. For example, if the winding 80U of the motor 157a becomes disconnected (or if a poor connection occurs in the edge parts 82U, 84U), a current greater than normal flows through the windings of the other motors 157b, 157c and 157d. Consequently, even though the motor driver 70 processes the total secondary current of the motors 157a-157d, it is difficult to detect that the winding 80U of the motor 157a, etc. is disconnected. In order to independently detect wiring disconnection of each of the motors 157a-157d that are connected in parallel, a sensor for detecting wiring disconnection must be attached to each of the motors 157a-157d.

By contrast, in the motor unit 59, for example, if the wiring 80U of the motor 57a becomes disconnected (or if a poor connection occurs in the edge parts 82U, 84U), current also ceases to flow through the windings 80U of the other motors 57b, 57c and 57d. If the total secondary current of the motors 57a-57d is processed, it can be detected that the U phase of one of the motors 57a-57d is disconnected. The motor driver 70 can detect that an abnormality (wiring disconnection, etc.) has occurred in one of the motors 57a-57d without a sensor for detecting wiring disconnection being attached to each of the motors 57a-57d. Further, the motors 57a-57d can be stopped.

Further, as described above, in the conventional motor unit 159, for example, if the winding 80U of the motor 157a becomes disconnected, a current greater than normal flows through the windings of the other motors 157b, 157c and 157d. Therefore, there is the danger that the windings of the other motors 157b, 157c and 157d will also become disconnected. By contrast, as described above, in the motor unit 59, for example, if the winding 80U of the motor 57a becomes disconnected, current also ceases to flow through the windings of the other motors 57b, 57c and 57d. Consequently, the disconnection can be prevented from spreading to the windings of the other motors 57b, 57c and 57d.

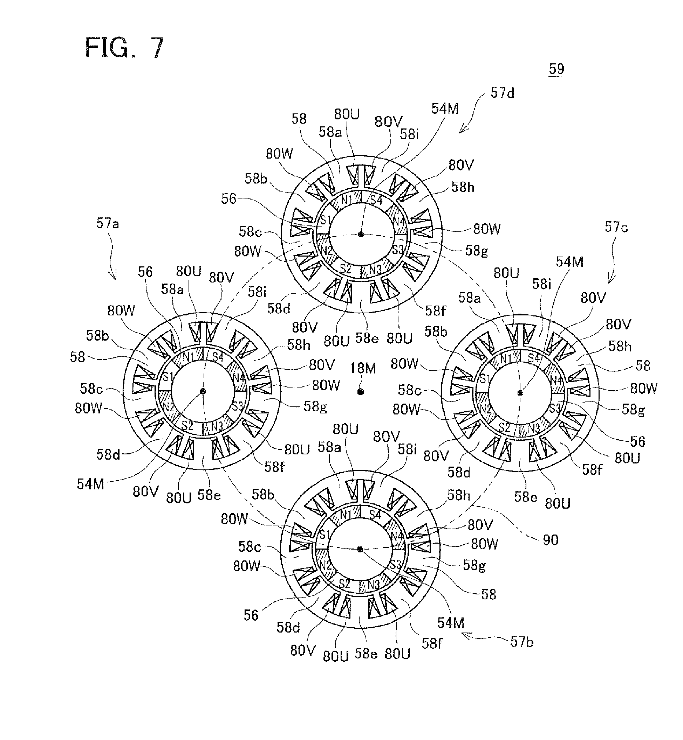

Another characteristic of the motor unit 59 will be described. Fig. 7 shows a cross-sectional view along the line VII-VII of Fig. 1. To increase clarity in the figure, illustrations of the stator supporting part 63 and the shaft 54b, etc. have been omitted in Fig. 7. The motors 57a-57d are positioned equidistantly around the axis line 18M of the internal gear member 18 (see also Fig. 1). The reference number 54M represents the axis line of the rotor 56. The reference number 90 represents a virtual circle having a radius equaling a distance between the axis line 18M and the axis line 54M. As described above, the motors 57a-57d have identical specifications. Moreover, in the following explanation, components in common in the motors 57a-57d will have the same reference number applied thereto, and an explanation thereof will be omitted.

The motor 57a comprises the ring shaped stator 58 and the rotor 56 positioned within the stator 58. The stator 58 comprises nine poll pieces 58a-58i. The windings 80U (see also Fig. 4) are wound around the poll pieces 58a, 58e and 58f. The windings 80W are wound around the poll pieces 58b, 58c and 58g. The windings 80V are wound around the poll pieces 58d, 58h and 58i. Eight pole permanent magnets N1-N4, S1-S4 (the permanent magnet 55 of Fig. 1) are positioned on the rotor 56. The permanent magnets N1-N4 are positioned with identical poles (N poles) facing the outer side. The permanent magnets S1-S4 are positioned with S poles facing the outer side. Each of the permanent magnets N1-N4, S1-S4 are positioned such that the poles facing the outer side alternate in a circumferential direction. In the motor unit 59, the phase angle between the rotor 56 and the stator 58 is identical in all the motors 57a-57d. For example, in all the motors 57a-57d, the poll piece 58a, around which the winding 80U is wound, and a central part of the permanent magnet N1 face one another.

As described above, the motors 57a-57d are connected in series. Consequently, identical phase current flows in each phase of the motors 57a-57d. In the motor unit 59, the phase angle between the rotor 56 and the stator 58 is identical in all the motors 57a-57d. Therefore, all the motors 57a-57d are electrically synchronized. The rotated member (the external gear 20) can be driven stably.

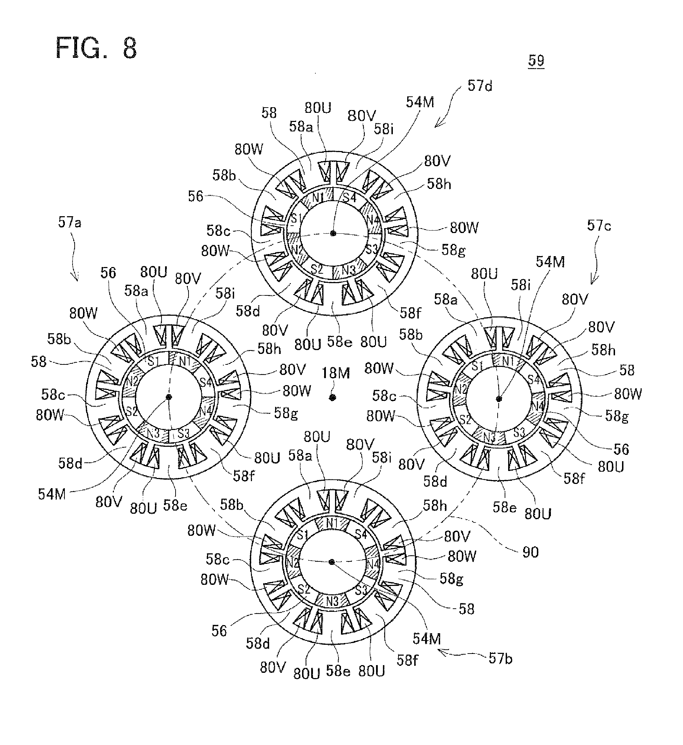

In Fig. 8, an example is shown in which the phase angle between the rotor 56 and the stator 58 is not identical in all the motors 57a-57d. In the motor 57a, the poll piece 58a, around which the winding 80U is wound, and a central part of the permanent magnet S1 face one another. In the motor 57b, the poll piece 58a and a boundary part between the permanent magnets N1 and S1 face one another. In the motor 57c, the poll piece 58a and an edge part of the permanent magnet S1 face one another. In the motor 57d, the poll piece 58a and a central part of the permanent magnet N1 face one another.

In the case where the phase angle between the rotor 56 and the stator 58 is not identical in all the motors 57a-57d, the torque applied to the rotated member (the external gear 20) can become biased, the rotation direction of the motors 57a-57d may become opposite to the desired direction, and a delay in stopping the rotation of the motors 57a-57d may occur. As shown in Fig. 7, if the phase angle between the rotor 56 and the stator 58 is made identical in all the motors 57a-57d, the above problems can be prevented from occurring.

In the motors 57 of the present embodiment, the windings 80U are wound around the poll pieces 58a, 58e and 58f, the windings 80W are wound around the poll pieces 58b, 58c and 58g, and the windings 80V are wound around the poll pieces 58d, 58h and 58i. Each of the windings 80U, 80W and 80V is positioned at symmetrical positions with respect to the axis line 54M. Consequently, electromagnetic force between the rotor 56 and the stator 58 is approximately symmetrical with respect to the axis line 54M. The electromagnetic force is well balanced when the rotor 56 is rotating, and problems such as vibration, etc. can be prevented from occurring.

As described above, the motors 57a-57d are controlled by one motor driver. Therefore, identical phase current flows in each phase of the motors 57a-57d. In the motor unit 59, the phase angle between the rotor 56 and the stator 58 is identical in all the motors 57a-57d. Consequently, all the motors 57a-57d are electrically synchronized. The driven member (the external gear 20) can be driven stably. In other words, the plurality of motors 57a-57d can be controlled by the one motor driver by providing the adjusting mechanism (the spline ring 72) that is capable of adjusting the phase angle between the rotor 56 and the stator 58.

Next, a manufacturing method of the reduction gear 100 will be described.
(First process) First, the aforementioned gear unit 1, that is, the gear unit 1 engaging with the plurality of crankshafts 49 in the external gear 20, is prepared. A detailed description of the process of manufacturing the gear unit 1 is omitted.

(Temporary fixing process) The rotor 56 is temporarily fixed on the shaft 54b (part of the crankshaft 49). The term "temporary fixing" means that the rotor 56 can rotate freely with respect to the shaft 54b. In other words, the rotor 56 is coupled to the shaft 54b. Next, the stator 58 is fixed to the stator fixing part 63 extending from the carrier 4. In other words, the stator 58 is fixed to the carrier 4. Put in perspective, the stator 58 is fixed to the gear unit 1. Naturally, the fixing position of the stator 58 is a position surrounding the rotor 56. The stator 58 is fixed to the gear unit 1 coaxially with the rotor 56. The temporary fixing of the rotor 56 and the fixing of the stator 58 is executed for all the motors 57. Either of the temporary fixing of the rotor or the fixing of the stator 58 may be executed first, or the two may be executed simultaneously.

When the temporary fixing process ends, the rotor 56 can rotate without rotating the crankshaft 49. That is, the phase between the rotor 56 and the stator 58 can be adjusted without rotating the crankshaft 49. Since all the crankshafts 49 are engaged with the external gear 20, "without rotating the crankshaft 49" means "while maintaining the engagement of the external gear 20 and the plurality of crankshafts 49". In this process, the motors 57 are attached to the gear unit 1, but are not completely attached thereto. Not completely attached means that this process can be called a process of temporarily fixing the motors 57 in the gear unit 1.

(Second process) Identical phase current is applied to all the motors 57. Here, "identical phase current is applied" means that identical current (may be direct current) is applied in an identical phase (e.g., the U phase (the winding 80U)). The rotor 56 can rotate freely with respect to the crankshaft 49. Therefore, the rotor 56 halts in an electromagnetically neutral position due to the magnetic force created by the stator 58. Since identical phase current is applied to all the motors 57, the relative rotational angle of the stator 58 and the rotor 56 matches in all the motors 57. Consequently, the phase angle between the rotor 56 and the stator 58 is uniform in all the motors 57. The phase angle between the rotor 56 and the stator 58 is aligned in all the motors 57 without the crankshaft 49 rotating.

(Third process) This process fixes the crankshaft 49 and the rotor 56 which have been temporarily fixed. First, the spline ring 72 is fixed to the shaft 54b. At this juncture, the spline ring 72 is fixed to the shaft 54b in a positional relationship whereby bolt holes (holes allowing passage through the through hole 71 for fixing the rotor 56 and the spline ring 72) of the rotor 56 are exposed at the through holes 71 (see Fig. 5) formed in the spline ring 72. Since the shaft 54b and the spline ring 72 form a spline junction, the relative angle of the two can only be determined discretely. However, as described above, the length of the through holes 71 in the circumferential direction is greater than the diameter of a shaft part of the bolts 74. Consequently, the spline ring 72 can be fixed to the shaft 54b at the position where the bolt holes are exposed in the through holes 71. Put the other way round, the length of the through holes 71 in the circumferential direction is sufficient if it allows the bolts 74 to move by one pitch of the spline 70.

Finally, for all the motors 57, the rotor 56 is bolted to the spline ring 72. That is, the rotor 56 is fixed to the crankshaft 49. Since the stator 58 has already been fixed to the carrier 4 (in perspective, to the gear unit 1) in the temporary fixing process, fixing the rotor 56 to the crankshaft 49 completes the fixing of the motor 57 to the gear unit 1. In other words, this third process can be termed a "process to fix the motor 57 to the gear unit 1". When this process ends, the driving device 100, in which the phase angle between the rotor 56 and the stator 58 is aligned in all the motors 57, is completed.

Moreover, the motor 57 is temporarily fixed in the gear unit 1 by means of the temporary fixing process. At this juncture, since free relative rotation of the shaft 54b and the rotor 56 is allowed, a rotational freedom remains for independently adjusting the relative rotation of the rotor 56 and the stator 58 in each of the motors 57. In this state, the second process is executed. The rotor 56 and the stator 58 of each of the motors 57 rotate relative to one another due to the interaction of the permanent magnet 55 and the electromagnet 80. The relative rotation of the rotor 56 and the stator 58 halts at a position where the magnetic force is balanced. Since identical phase current is applied to all the motors 57, the phase of the rotor 56 and the stator 58 halts? in the same position in all the motors 57. In this state, the rotor 56 is fixed to the shaft 54b (the third process).

In the aforementioned manufacturing method, the motors 57a-57d are temporarily fixed in the gear unit 1 while the rotational freedom for independently adjusting the relative rotation of the rotor 56 and the stator 58 remains. Consequently, the position of the motors 57a-57d with respect to the gear unit 1 can be determined while a deviation is kept between the phase angle between the rotor 56 and the stator 58. After the motors 57a-57d have been fixed in position, the phase of all the motors 57a-57d is aligned by means of magnetic force. The geometric positional relationship of the gear unit 1 and the motors 57a-57d, and the electromagnetic force phase relationship between the rotor 56 and the stator 58 of all the motors 57 can be determined accurately.

In the aforementioned manufacturing method, the temporary fixing process is executed before the second process, in which current is applied to the motor 57. In the third process that follows the second process, the fixing of the motor 57 to the gear unit 1 is completed simply by fixing the rotor 56 to the crankshaft 49. The possibility can be minimized for physical force to be exerted between the gear unit 1 and the motor 57 after the phase angle between the rotor 56 and the stator 58 has been aligned in the second process. When the gear unit 1 and the motor 57 are to be fixed, the possibility of a deviation in the phase angle between the rotor 56 and the stator 58 can be reduced. Further, by executing the temporary fixing process, the phase angle between the rotor 56 and the stator 58 can be aligned in a state where all the motors 57 have been attached to the gear unit 1 (a state where the motors 57 are not completely fixed to the gear unit 1). Operation is simpler than the case where the motors 57 are attached to the gear unit 1 after aligning the phase angle of the motors 57.

In the aforementioned manufacturing method, the phase angle between the rotor 56 and the stator 58 is aligned by the second process, that is, applying identical phase current to all the motors 57. The phase angle of the plurality of motors 57a-57d can be aligned at one time. Further, when the third process is to be executed, the phase angle between the rotor 56 and the stator 58 does not deviate due to the provision of the adjusting mechanism (the through holes 71 formed in the spline ring 72) that is capable of independently adjusting the phase angle between the rotor 56 and the stator 58.

In the aforementioned manufacturing method, in the temporary fixing process, the rotor 56 is temporarily fixed, and the stator 58 is fixed to the carrier 4. By temporarily fixing the rotor 56, relative rotation of the rotor 56 and the stator 58 is allowed without rotating the crankshaft 49. Conversely, the same results can be achieved by engaging (fixing) the rotor 56 to the crankshaft 49, and temporarily fixing the stator 58 in the carrier 4. "Temporarily fixing the stator 58 in the carrier 4" means that the stator 58 is rotatably attached to the carrier 4. Regardless of whether the rotor 56 or the stator 58 is temporarily fixed, "the temporary fixing process" means a process of attaching the motor 57 to the gear unit 1, this process allowing the relative rotation of the rotor 56 and the stator 58 without rotating the crankshaft 49 (in other words, while maintaining the engagement of the plurality of crankshafts 49 with the external gear 20). Moreover, in the case where the stator 58 is temporarily fixed in the temporary fixing process, the third process becomes a process to fix the stator 58 to the carrier 4.

Although it is preferred that the manufacturing process of the reduction gear 100 includes the temporary fixing process, the temporary fixing process may be omitted. In this case, in the third process, the plurality of motors 57, in which the phase angle between the rotor 56 and the stator 58 is aligned, is fixed to the gear unit 1. That is, for each of the motors 57 in which the phase angle is aligned, the rotor 56 is engaged with the crankshaft 49, and the stator 58 is fixed to the carrier 4 (the gear unit 1). Even though the temporary fixing process is omitted, the phase angle between the rotor 56 and the stator 58 can be aligned at one time by flowing identical phase current through the plurality of motors 57. The plurality of motors 57 in which the phase angle is aligned can be fixed to the gear unit 1.

Here, an example will be described in which the gear unit 1 and the motor unit 59 (the motors 57a-57d) have been fixed without executing the second process. Fig. 8 shows a cross-sectional view along the line VII-VII of the reduction gear 100 in which the second process has not been executed. As described above, in the case where the phase angle between the rotor 56 and the stator 58 is not identical in all the motors 57a-57d, the torque applied to the driven member (the external gear 20) can become biased, the rotation direction of the motors 57a-57d can become the opposite direction to that desired, and there can be a delay in stopping the rotation of the motors 57a-57d.

Moreover, as described above, Fig. 8 also shows an example of a reduction gear that does not comprise an adjusting mechanism capable of independently adjusting the phase angle between the rotor 56 and the stator 58. Even though the phase angle between the rotor 56 and the stator 58 is identical in all the motors 57a-57d, unless the gear unit 1 and the motors 57a-57d are fixed while maintaining this state, the phase angle between the rotor 56 and the stator 58 will not be identical in all the motors 57a-57d. That is, if the fixing position of the spline ring 72 and the rotor 56 cannot be adjusted, the phase angle between the rotor 56 and the stator 58 will not be identical ultimately in all the motors 57a-57d.

Below, a reduction gear of another embodiment is shown. The reduction gear described in the embodiment below is a variant of the reduction gear 100. Consequently, only parts differing from those of the reduction gear 100 will be described. Specifically, the reduction gear of the embodiment below differs only in the configuration of the region 61 of the reduction gear 100. Consequently, only the configuration of the region 61 (equivalent to Fig. 4 of the reduction gear 100) is shown. Further, the same reference number or a reference number having the same two lower digits may be applied to components that are essentially identical to those in the reduction gear 100, and an explanation thereof may be omitted.

### (Second embodiment)

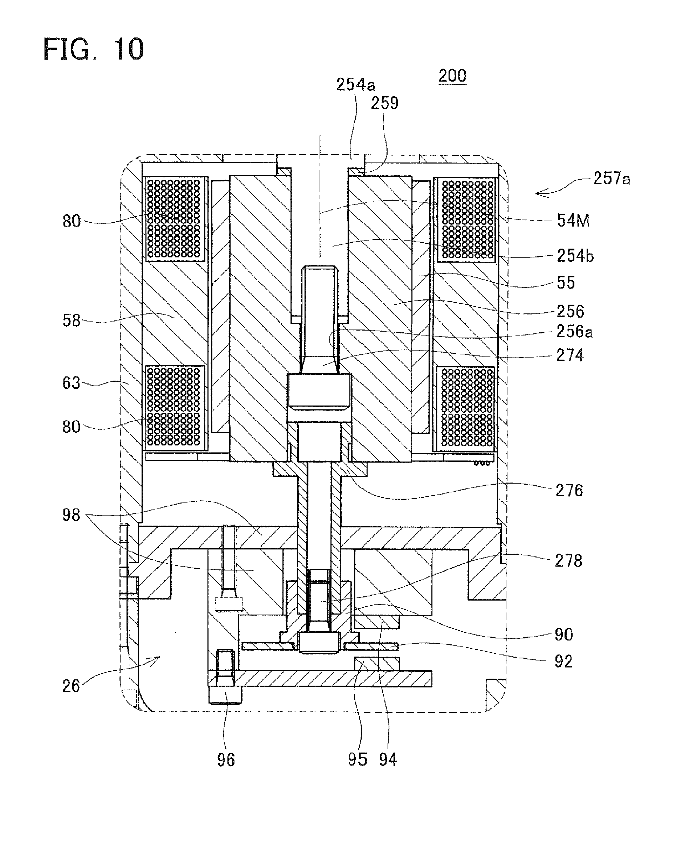

Fig. 10 shows a partial cross-sectional view of a reduction gear 200. In the reduction gear 200, a shaft 254b and a rotor 256 are fixed by a bolt 274. Specifically, a step is formed between a shaft 254a and the shaft 254b. Consequently, the rotor 256 is made to make contact with the shaft 254a by tightening the bolt 274. Frictional force occurring between the shaft 254a and the rotor 256 prevents relative rotation of the shaft 254b and the rotor 256, and displacement of the rotor 256 in the direction of the axis line 54M. A friction plate 259 is positioned between the shaft 254a and the rotor 256, increasing the frictional force occurring between the shaft 254a and the rotor 256.

Moreover, a shaft part of the bolt 274 is passed through a bolt through hole 256a formed in the rotor 256, and is fixed to the shaft 254b. The diameter of the bolt through hole 256a is greater than the diameter of shaft part of the bolt 274, and is smaller than the diameter of a head part of the bolt 274. If the bolt 274 is loosened, the shaft 254b and the rotor 256 can rotate relative to one another. Consequently, the phase angle of the rotor 256 and the stator 58 can be aligned in all the motors 57 (the second process), and the rotor 256 can be fixed to the shaft 254b (the third process). The configuration in which the shaft 254b and the rotor 256 rotate relative to one another when the bolt 274 is loosened, and in which the relative rotation of the shaft 254b and the rotor 256 is restricted when the bolt 274 is tightened, can also be termed an "adjusting mechanism capable of independently adjusting the phase angle between the rotor 256 and the stator 58".

A fixing member 276 is fixed to the rotor 256, and the rotation part 90 of the encoder 26 is fixed to the fixing member 276. Consequently, the rotor 256 and the rotation part 90 of the encoder 26 (in other words, the shaft 254b and the rotation part 90) rotate integrally. The rotational angle of the rotor 256 (this is also the rotational angle of the shaft 254b) can be detected by the encoder 26. The fixing member 276 can be omitted from motors 257 to which the encoder 26 is not attached (see also Fig. 1).

In the reduction gear 200, the friction plate 259 is positioned between the shaft 254a and the rotor 256. However, if the bolt 274 is tightened so that the shaft 254b and the rotor 256 do not rotate relative to one another, the friction plate 259 does not need to be provided. That is, the friction plate 259 can be adopted as appropriate depending on the torque applied to the shaft 254b.

### (Third embodiment)

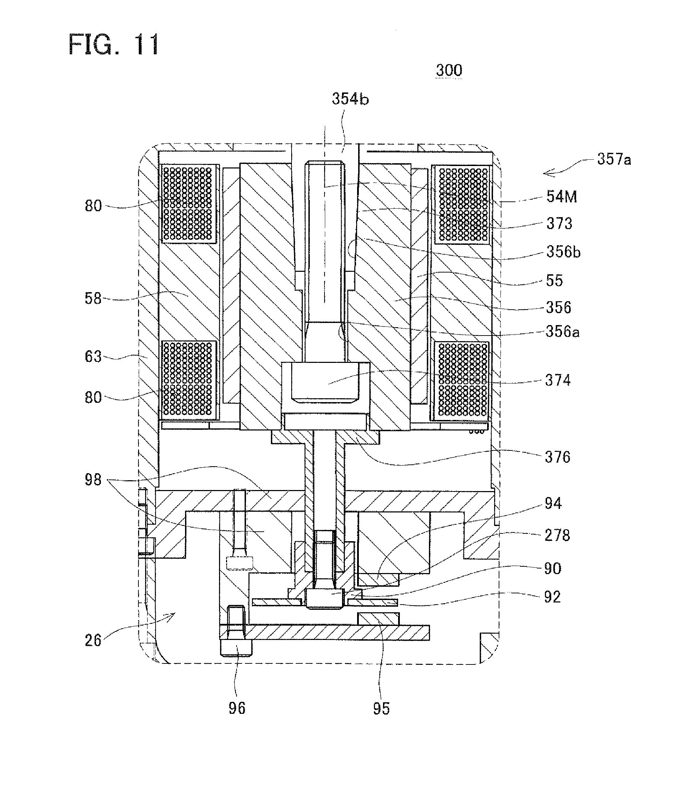

Fig. 11 shows a partial cross-sectional view of a reduction gear 300. In the reduction gear 300, a shaft 354b and a rotor 356 are fixed by a bolt 374. An oblique part 373 is formed in the shaft 354b, and an oblique part 356b is formed on the rotor 356. Therefore, when the bolt 374 is tightened, frictional force occurs in the shaft 354b and the rotor 356. The frictional force prevents relative rotation of the shaft 354b and the rotor 356, and displacement of the rotor 356 in the direction of the axis line 54M. When the bolt 374 is loosened, the shaft 354b and the rotor 356 can rotate relative to one another. Consequently, the oblique part 373 of the shaft 354b and the oblique part 356b of the rotor 356 can also be termed an "adjusting mechanism capable of independently adjusting the phase angle between the rotor 356 and the stator 58".

Moreover, the diameter of a bolt through hole 356a is greater than the diameter of a shaft part of the bolt 374, and is smaller than the diameter of a head part of the bolt 374. A fixing member 276 is fixed to the rotor 356, and the rotation part 90 of the encoder 26 is fixed to the fixing member. Consequently, the rotor 356 and the rotation part 90 of the encoder 26 rotate integrally. The rotational angle of the rotor 356 (the rotational angle of the shaft 354b) can be detected by the encoder 26. Further, the fixing member 376 can be omitted from motors 357 to which the encoder 26 is not attached.

### (Fourth embodiment)

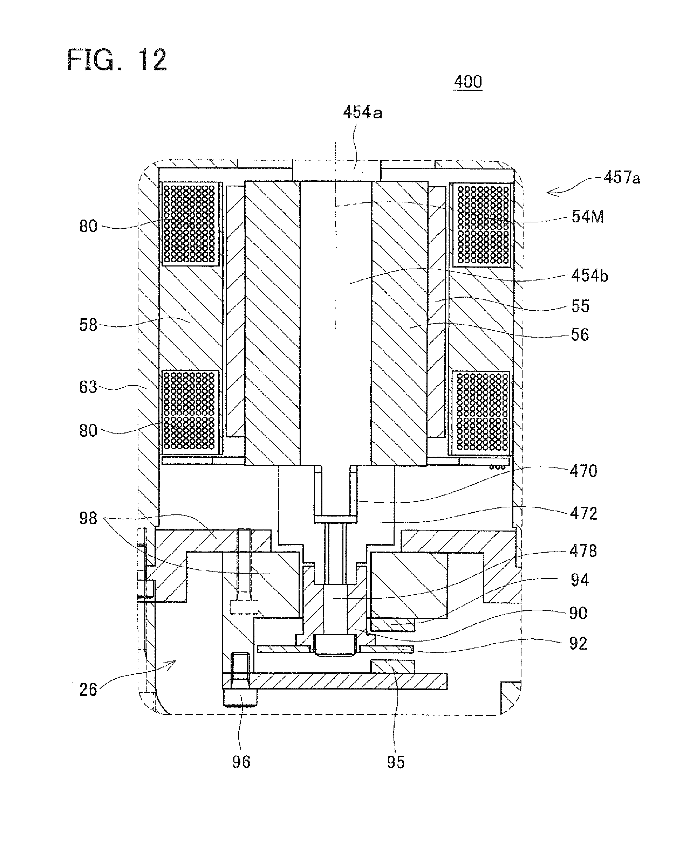

Fig. 12 shows a partial cross-sectional view of a reduction gear 400. In the reduction gear 400, a shaft 454b and the rotor 56 are fixed by a nut member 472 and a screw part 470 formed on the shaft 454b. When the nut member 472 is tightened, the rotor 56 makes contact with a shaft 454a. Consequently, the rotor 56 is gripped between the shaft 454a and the nut member 472, preventing the shaft 454b and the rotor 56 from rotating relative to one another and preventing the rotor 56 from being displaced in the direction of the axis line 54M. This configuration in which the shaft 454b and the rotor 56 rotate relative to one another when the nut member 472 is loosened, and in which the relative rotation of the shaft 454b and the rotor 56 is restricted when the nut member 472 is tightened, can also be termed an "adjusting mechanism capable of independently adjusting the phase angle between the rotor 56 and the stator 58". Moreover, in the reduction gear 400, the rotation part 90 of the encoder 26 is fixed to the nut member 472 by a bolt 478. Consequently, the rotor 56 and the rotation part 90 of the encoder 26 rotate integrally.

### (Fifth embodiment)

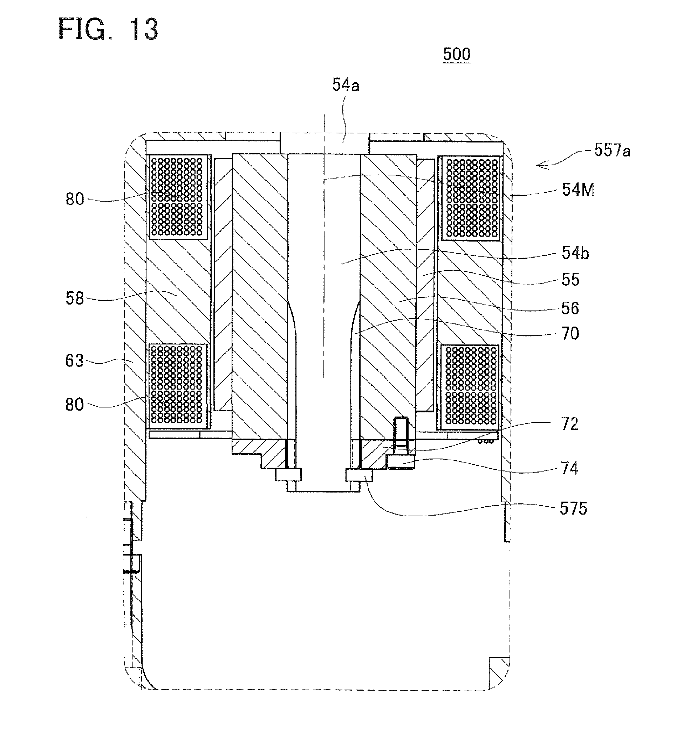

Fig. 13 shows a partial cross-sectional view of a reduction gear 500. Here, an example will be explained in which an encoder is not coupled to a motor 557. In the reduction gear 100, the rotor supporting member 76 (see Fig. 1) prevents displacement of the rotor 56 in the direction of the axis line 54M. Due to standardization of components, the rotor supporting member 76a is also attached to the motor 57c which does not have the encoder 26 attached thereto. By contrast, in the reduction gear 500, an encoder is not coupled to the motors 557 (all the motors 557a-557d). Consequently, in the motor 557a, a retaining ring 575 is adopted instead of the rotor supporting member 76a. The retaining ring 575 prevents displacement of the rotor 56 in the direction of the axis line 54M. Displacement of the rotor 56 in the direction of the axis line 54M can be prevented using a simpler configuration compared to the rotor supporting member 76a of the reduction gear 100. Moreover, although not shown, in the reduction gear 500, the retaining ring 575 is also adopted in the other motors 557 (the motors 557b-557d). Further, the retaining ring 557 may be adopted in the motors not having the encoder coupled thereto of the reduction gears 100-400.

Some technical features of the gear transmission taught in the present specification will be listed. As described above, in the case where a plurality of motors is electrically connected in series, the plurality of motors can be controlled by one motor driver. Identical phase current flows through all the motors. On the other hand, the rotor of each motor rotates while being interlocked via the driven member (external gear). Therefore, the output shafts of each of the motors cannot rotate independently from the other motors. They are in a relationship where, when the rotor rotational angle of one motor is determined, the rotor rotational angle of the remaining motors is determined. Consequently, they are in a relationship where, when the mechanical phase angle between the rotor and the stator of one motor is determined, the phase angle between the rotor and the stator of the remaining motors is determined. If identical phase current is made to flow through a plurality of motors in which the mechanical phase angle between the rotor and the stator has not been aligned, this leads to differences in the output torque of the motor. Consequently, there is the risk that this will lead to bias in the torque applied to the external gear from the output shafts of each of the motors.

The gear transmissions of above embodiments are provided with the adjusting mechanism capable of independently adjusting the phase angle between the rotor and the stator of each motor while maintaining the engagement of the driven member and the plurality of crankshafts. The adjusting mechanism may typically be a joint allowing and capable of preventing the relative rotation of two members. This type of joint may be inserted between the crankshaft and the output shaft of the motor, between the output shaft and the rotor, between the case of the motor and the gear unit, or between the case of the motor and the stator.

Specifically, the adjusting mechanism is as follows. The rotor engages rotatably with the output shaft of the motor. A fixing member that spans both can be attached to the output shaft and the rotor. Without the fixing member, the rotor rotates freely with respect to the rotating shaft. Since the rotor can rotate freely even though the output shaft of the motor is engaged with the crankshaft, the phase angle between the rotor and the stator can be adjusted freely. After adjustment has ended, if the fixing member is attached, the rotor is fixed to the output shaft. More specifically, an oval shaped through hole that extends in a circumferential direction is formed in the fixing member. The fixing member is attached such that either the rotor or the output shaft cannot rotate, and a bolt is passed through the through hole of the fixing member, fixing the fixing member and the other member. If the bolt is loosened, the rotor or the output shaft can rotate to the extent of the length of the circumferential direction of the through hole. This type of adjusting mechanism may be provided between the case of the motor and the stator. Various configurations can be conceived for the shape of the adjusting mechanism.

By providing the adjusting mechanism, in the aforementioned gear transmission, the motors are attached to the gear unit and then, while maintaining the engagement of the driven member and the plurality of crankshafts, the phase angle between the rotor and the stator can be adjusted independently to align the phase. That is, the phase angle between the rotor and the stator can be adjusted independently to align the phase by means of the adjusting mechanism.

The rotor of each of the motors engages respectively with the plurality of crankshafts. The stator of each of the motors is fixed to the carrier. Moreover, configurations such as a configuration where the crankshaft also functions as the output shaft of the motor, a configuration where the output shaft of the motor is coaxially fixed to the crankshaft, or a configuration where the output shafts of each of the motors and the crankshafts are joined via a gear, etc. can be given as the "engagement of the rotor and the crankshaft".

In the case where the gear unit is a gear unit comprising the aforementioned internal gear member, carrier, crankshafts, and external gear, if at least one of "the relative rotational angle of the crankshaft and the rotor", or "the relative rotational angle of the carrier and the stator" can be adjusted independently for each motor, the phase angle between the rotor and the stator of each of the motors can be adjusted independently while maintaining the engagement of the driven member and the plurality of crankshafts.

By aligning the mechanical phase angle between the rotor and the stator in all the motors, the aforementioned gear transmission can equalize the output torque of the motors even though the plurality of motors is controlled by one motor driver. Here, "the plurality of motors is controlled by one motor driver" is equivalent to identical phase current flowing through each of the motors. To deal with this, the gear transmission of the present embodiments is capable of equalizing the torque applied to the driven member from the rotating shafts of the plurality of motors. The technique taught in the present specification is suitable for application to a gear transmission of which all of the plurality of motors are controlled by one motor driver.

Technical characteristics of the manufacturing method of the gear transmission (an example of a driving device) taught in the present specification will be listed. In the embodiments, the manufacturing method has been described of the driving device in which the mechanical phase angle between the rotor and the stator of all the motors has been aligned.

This manufacturing method comprises the following processes:
(1) the first process of preparing the gear unit and the plurality of motors;
(2) the second process of applying identical phase current to each of the motors, aligning the phase angle between the rotor and the stator;
(3) the third process of fixing the motor to the gear unit.
Here, the gear unit comprises the driven member and the plurality of input shafts (crankshafts) that engages with the driven member.

In the second process, the stator and the rotor of each of the motors rotate relative to one another due to the interaction of the permanent magnet and the electromagnet. The relative rotation of the rotor and the stator is halted in a position where the magnetic force is balanced. Since identical phase current is applied to all the motors, the phase of the rotor and the stator halts in the same position in all the motors. That is, the phase angle can be aligned in all the motors. In this state, the motor is fixed to the gear unit (the third process). In the aforementioned manufacturing method, the phase angle between the rotor and the stator is aligned in all the motors by the magnetic force. The phase angle between the rotor and the stator of the plurality of motors can be aligned simply and simultaneously.

All the motors may have current passed therethrough and their phase angles aligned before the motor is joined to the gear unit. However, it is more efficient to align the phase angle of the motors after the motors have been temporarily fixed in the gear unit. Specifically, the following two sets of processes are suitable.
(1) Before the second process, the rotor of the motor is coupled rotatably to the input shaft, and the temporary fixing process for fixing the stator of the motor to the gear unit is executed. At this juncture, in the third process, the rotor of the motor may be engaged with the input shaft.
(2) Before the second process, the rotor of the motor is engaged with the input shaft, and the temporary fixing process for coupling the stator of the motor rotatably to the gear unit is executed. At this juncture, in the third process, the stator of the motor may be fixed to the gear unit.
   The process after aligning the phase angle between the rotor and the stator are simplified by either of these sets of processes.

When the rotor is to be engaged with the input shaft, and when the stator is to be fixed to the gear unit, physical force is exerted between the gear unit and the motor. If either one of the temporary fixing processes is executed before the second process, the opportunity can be minimized for physical force to be exerted between the gear unit and the motor after the phase angle has been aligned. The possibility of deviation in the phase angle between the rotor and the stator when the third process is executed can be reduced.

Some suitable variants of the embodiments will be described. In the aforementioned embodiments, examples were described in which the relative rotational angle of the rotor with respect to the input shaft can be independently adjusted for each motor. However, the relative rotational angle of the carrier with respect to the stator may be independently adjusted for each motor. Alternately, both of such characteristics may be provided.

In the aforementioned embodiments, examples were described in which the rotor of the motor and the input shaft are directly coupled. Alternately, the rotating shaft (the output shaft) of the motor may engage with the input shaft via a gear, etc.

In the aforementioned embodiments, the rotational angle detecting device (the encoder) is attached to one of the motors. Instead of the rotational angle detecting device, an angular velocity detecting device may be attached to one of the motors. The type of device is not restricted as long as it is capable of detecting the driving state of the motor.

In the aforementioned embodiments, the central through hole is formed that passes through the gear unit from its base part side to its output side. The central through hole is not a necessarily required configuration, but may be formed as needed.

In the aforementioned embodiments, a reduction gear comprising a motor unit has been described. However, another driven member can be driven using the motor unit of the embodiments. For example, a roller or a pulley, etc. of a conveyor belt can be driven.

Further, the number of motors comprising the motor unit is not restricted to four. The number of motors may be two, or may be three. Further, the number may be five or more. Further, the motors need not be three-phase motors. The motors may be single-phase motors, or may be four-phase or more.

Specific examples of the present invention are described above in detail, but these examples are merely illustrative and place no limitation on the scope of the patent claims. The technology described in the patent claims also encompasses various changes and modifications to the specific examples described above. The technical elements explained in the present specification and drawings provide technical utility either independently or through various combinations. The present invention is not limited to the combinations described at the time the claims are filed. Further, the purpose of the examples illustrated by the present specification and drawings is to satisfy multiple objectives simultaneously, and satisfying any one of those objectives gives technical utility to the present invention.

## Claims

1. A motor unit comprising:
a plurality of motors electrically connected in series, wherein an output shaft of each of the plurality of motors engages with one driven member.

2. The motor unit according to claim 1, wherein
each of the plurality of motors is a multi-phase motor, and
a phase angle between a rotor and a stator of each of the plurality of motors is identical.

3. The motor unit according to claim 1 or 2, wherein
a sensor that detects one of a rotational angle of the output shaft and an angular velocity of the output shaft is attached to any one of the plurality of motors, and
the one of the plurality of motors to which the sensor is attached is controlled with feedback based on an output signal of the sensor.

4. A gear transmission comprising:
a motor unit according to any one of claims 1 to 3;
an internal gear member having an internal gear formed at its inner circumference;
a carrier positioned coaxially with the internal gear and supported rotatably by the internal gear member;
a plurality of crankshafts, each of which extends along an axis line of the carrier, is supported rotatably by the carrier, and has an eccentric member fixed thereto; and
the one driven member having a plurality of through holes and outer teeth, the plurality of through holes being engaged respectively with the eccentric members of the plurality of crankshafts and the outer teeth meshing with the internal gear, the one driven member configured to rotate eccentrically around the axis line of the carrier in accordance with rotation of the plurality of crankshafts,
wherein the plurality of motors is fixed to one of the internal gear member and the carrier,
and
the output shafts of the plurality of motors engage respectively with the plurality of crankshafts.

5. The gear transmission according to claim 4, further comprising:
an adjusting mechanism capable of independently adjusting a phase angle between the rotor and the stator of each of the plurality of motors while maintaining engagement of the one driven member and the plurality of crankshafts,
wherein
the rotors of the plurality of motors engage respectively with the plurality of crankshafts,
and
the stators of the plurality of motors are fixed to the carrier.

6. The gear transmission according to claim 5, wherein
at least one of the below is capable of being independently adjusted for each of the plurality of motors:
a relative rotational angle of the crankshaft and the rotor; and
a relative rotational angle of the carrier and the stator.
